# EUROPEAN PATENT SPECIFICATION

(11) **EP 2 390 127 B1**
(45) Date of publication and mention of the grant of the patent: **11.09.2013**
(21) Application number: 11167388.5
(22) Date of filing: 25.05.2011
(51) Int. Cl.: B60K 6/547, B60K 6/48

(54) **Hybrid driving system and vehicle having the same**
Hybridantriebssystem und Fahrzeug damit
Système de commande hybride et véhicule doté de celui-ci

(30) Priority: 31.05.2010 CN 201010190297
(43) Date of publication of application: 30.11.2011
(73) Proprietor: Byd Company Limited, Shenzhen 518118 (CN)
(72) Inventor: Xie, Shibin, 518118, Shenzhen (CN); Ruan, Ou, 518118, Shenzhen (CN); Zhai, Zhen, 518118, Shenzhen (CN); Zhao, Ping, 518118, Shenzhen (CN)
(74) Representative: Gulde Hengelhaupt Ziebig & Schneider

(56) References cited:
- US-A1- 2005 139 035
- US-A1- 2007 259 748
- US-A1- 2008 009 379
- US-A1- 2008 076 616

## Description

The present invention relates to a hybrid driving system and a hybrid vehicle comprising the hybrid driving system.

### BACKGROUND

Presently, a hybrid vehicle usually adopts a power assembly that comprises two or more types of energy including electricity. The hybrid vehicle adopting an engine and a battery as the power system has become a researching hot point of the current power system of the vehicles due to its low energy cost / and low emission performance.

US 2007/0259748 A1 discloses a hybrid power driving system that is coupled to an engine. The hybrid power driving system comprises a dual clutch transmission and a motor. The motor and forward free gears of the transmission are coupled to an output shaft, so that the power of the motor and the engine are transferred via the same output shaft out of the transmission.

US 2005/0139035 A1 (Chinese Application CN1637327), in accordance with the preamble of claims 1 and 5, discloses a hybrid power driving system that is coupled to an engine. The hybrid power driving system comprises a dual clutch transmission and a motor. The transmission comprises a first input shaft connected with a first clutch and a second input shaft connected with a second clutch of the dual clutch transmission. The first input shaft is hollow and the second input shaft is inserted into the first shaft. Forward free gears of the transmissions are disposed on a first and a second output shaft, and match stationary gears of the transmission, which are disposed on the first and the second input shaft. The output shafts are connected to a differential. The motor is coupled to the first output shaft, so that the power of the motor and the engine are transferred via the same output shaft while using the first four gears.

Since the motor is directly coupled with the hollow input shaft of the transmission, the motor disposal may be complicated and the space may not be properly utilized; moreover, the hollow input shaft may be broken while enduring a too large torque.

### SUMMARY

The present invention is directed to solve at least one problem existing in the prior art.

The hybrid power driving system according to a first alternative comprises: an engine including a crankshaft, a dual clutch transmission coupled to the crankshaft; wherein the dual clutch transmission includes: a first clutch and a second clutch effectively connected with the crankshaft; a transmission having: a first input shaft connecting with the first clutch; a second input shaft connecting with the second clutch; wherein the first input shaft is hollow, the second input shaft is inserted into the first shaft and shares the same axle with the first shaft; shifting gear sets, wherein each shifting gear set comprises at least a stationary gear and a forward free gear matching the stationary gear; the stationary gears of the shifting gear sets are disposed on the first input shaft and the second input shaft; a first output shaft having one end coupled with a differentiala second output shaft having one end coupled with the differential. The invention is characterized in that the second output shaft has the other end connected with a driving motor, whereby the first output shaft is disposed with the forward free gears of the shifting gear sets and the driving motor drives the second output shaft directly.

Further, the present invention also provides a hybrid power driving system according to a second alternative comprising: an engine including a crankshaft, a dual clutch transmission coupled to the crankshaft; wherein the dual clutch transmission includes: a first clutch and a second clutch effectively connected with the crankshaft; a transmission having: a first input shaft connecting with the first clutch; a second input shaft connecting with the second clutch; wherein the first input shaft is hollow, the second input shaft is inserted into the first shaft and shares the same axle with the first shaft; shifting gear sets, wherein each shifting gear set comprises at least a stationary gear and a forward free gear matching the stationary gear; the stationary gears of the shifting gear sets are disposed on the first input shaft and the second input shaft; a first output shaft and a second output shaft disposed with the forward free gears of the shifting gear sets having one end coupled with a differential. The invention is characterized by a third output shaft having one end coupled with the differential, and the other end connected with a driving motor, wherein the driving motor drives the third output shaft directly.

An embodiment in the present invention provides a hybrid driving system that may have simpler motor arrangement.

It can be understood that, comparing the existing method of arranging the motor on the hollow input shaft to the hybrid driving system according to the embodiments of the present invention, the motor arrangement is simpler and the space is better utilized. Meanwhile, the problem of breaking the hollow input shaft while subject to a large torque may be avoided. Moreover, as the driving motor drives the second output shaft (according to the first alternative) or the third output shaft (according to the second alternative) directly, which may also comprise the reverse shift free gear, pure electric reversing mode may be achieved.

Furthermore the present invention provides a vehicle comprising the above mentioned hybrid driving systems, preferably the hybrid driving system may be disposed in the front cabin of the vehicle.

The vehicle provided in the present invention adopts above mentioned hybrid driving system. Compared to the prior art of arranging the driving motor on the hollow input shaft, the space may be better utilized and the disposal of other components of the vehicle in the front cabin is easier. Moreover, by adopting the dual clutch transmission in the hybrid vehicle, the characteristics of the dual clutch transmission may be fully utilized and further enhance the dynamical performance and fuel economy.

Further aspects of the invention could be learned from the description and the claims.

### DESCRIPTION OF THE DRAWINGS

These and other aspects and advantages of the disclosure will become apparent and more readily appreciated from the following descriptions taken in conjunction with the drawings in which:
Fig 1 shows a second embodiment of the hybrid driving system according to the present invention;
Fig 2 shows a third embodiment of the hybrid driving system according to the present invention.

### DETAILED EMBODIMENTS OF THE PRESENT INVENTION

Reference will be made in detail to embodiments of the present disclosure. The embodiments described herein with reference to drawings are explanatory, illustrative, and used to generally understand the present disclosure. The same or similar elements and the elements having same or similar functions are denoted by like reference numerals throughout the descriptions.

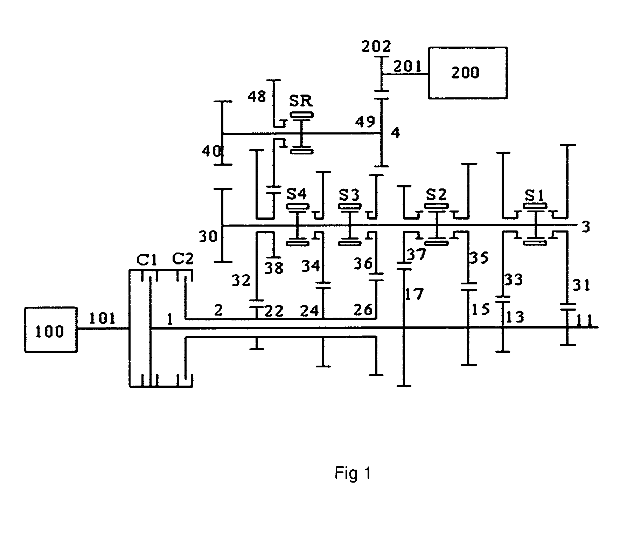

As shown in Fig. 1 through Fig. 2, a hybrid driving system according to an embodiment of the present invention comprises an engine 100 having a crankshaft 101 and a dual clutch transmission, the dual clutch transmission comprises a first clutch C2, a second clutch C1 and a transmission, the first clutch C2 and the second clutch C1 are effectively connected with the crankshaft 101 of the engine. The transmission has a first input shaft 2 effectively connected with the first clutch C2, a second input shaft 1 effectively connected with the second clutch C1, transmission shifting gear sets and output shafts. Each of the transmission shifting gear sets at least comprises a stationary gear and a free gear. The free gear engages or disengages with the output shaft via a corresponding shifting clutch which further realizes shifting connection with the input shaft and the output shaft.

The output shafts are coupled with the differential and one output shaft has one end that is further away from the differential is connected with a driving motor 200, the driving motor 200 drives the output shaft directly. The first input shaft 2 is hollow, and the second input shaft 1 is set inside the first input shaft 2 and shares the same axis.

The following are examples which further describe the details of the present invention.

### Example 1

As shown in Fig. 1, the present example has a first output shaft 3 and a second output shaft 4, the free gears 31...38, 48 of the shifting gear set are disposed on the first output shaft 3 and the second output shaft 4, the stationary gears 11...26 of the shifting gear set are disposed on the first input shaft 2 and the second input shaft 1. Specifically, from the engine side, the first input shaft 2 is in sequence disposed with a second shift stationary gear 22, a fourth shift stationary gear 24 and a sixth shift stationary gear 26, and the second input shaft 1 is in turns disposed with a seventh stationary gear 17, a fifth stationary gear 15, a third stationary gear 13 and a first stationary gear 11, the first output shaft 3 is in turns disposed with free gears (31,32, 33, 34, 35, 36, 37) respectively matching the stationary gears (11, 22, 13, 24, 15, 26, 17) and a first driving gear 30, the second output shaft 4 is disposed with a reverse shift free gear 48, a second driving gear 40 connecting the differential, wherein the second shift free gear 32 is a stepped gear having a smaller intermediate driving gear 38, the intermediate driving gear 38 is engaged with the reverse shift free gear 48.

In the present example, the driving motor 200 drives the second output shaft 4 directly, wherein, the driving shaft 201 of the driving motor has a driving gear 202, one end of the second output shaft 4 that is further away from the differential is disposed with a driven gear 49 engaging the driving gear 202, the driven gear 49 is fixedly connected or integrated with the second output shaft 4.

In the present example, a first shifting clutch S1 may be disposed between the first shift free gear 31 and the third shift free gear 33 to engage or disengage the first shift free gear 31 and the third shift free gear 33 with the first output shaft 3; a second shifting clutch S2 may be disposed between the fifth shift free gear 35 and the seventh shift free gear 37 to engage or disengage the fifth shift free gear 35 and the seventh shift free gear 37 with the first output shaft 3; a third shifting clutch S4 may be disposed between the second shift free gear 32 and the fourth shift free gear 34 to engage or disengage the second shift free gear 32 and the fourth shift free gear 34 with the first output shaft 3; a fourth shifting clutch S3 may be disposed at the engine side of the sixth shift free gear 36 to engage or disengage the sixth shift free gear 36 with the first output shaft 3; a fifth shifting clutch SR may be disposed at the transmission side of the reverse shift free gear 48 to engage or disengage the reverse shift free gear 48 with the second output shaft 4.

In the present example, while the driving motor 200 drives the same output shaft as the reverse shift free gear (the second output shaft), a pure electrical reversing mode may also be realized.

### Example 2

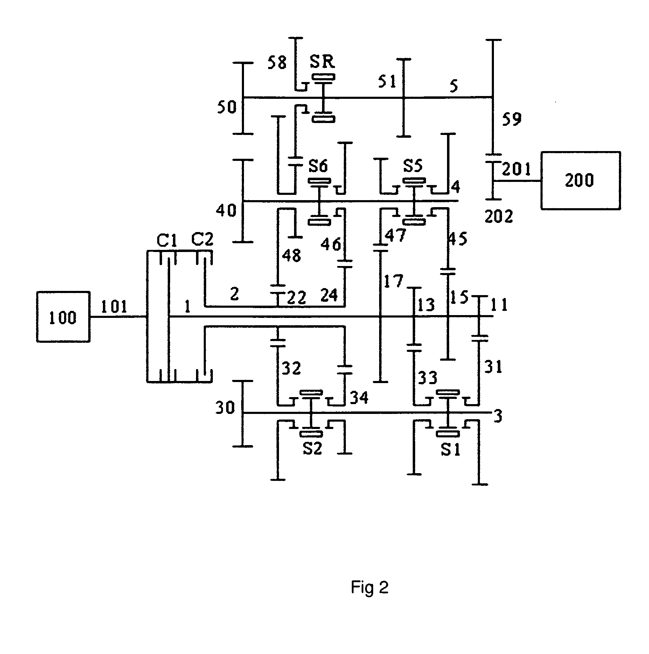

As shown in Fig. 2, the present example has a first input shaft 2, a second input shaft 1, a first output shaft 3, a second output shaft 4 and a third output shaft 5, the free gears 31... 34, 45...48, 58 of the shifting gear set are disposed on the first output shaft 3, the second output shaft 4 and the third output shaft 5, the stationary gears 11...24 of the shifting gear set are disposed on the first input shaft 2 and the second input shaft 1. Specifically, starting from the engine side, the first input shaft 2 is in turns disposed with a second shift stationary gear 22, a fourth shift stationary gear 24, and the second input shaft 1 is in turns disposed with a seventh stationary gear 17, a fifth stationary gear 15, a third stationary gear 13 and a first stationary gear 11, in which, the sixth shift and the fourth shift shares one stationary gear 24, the first output shaft 3 is disposed with a first driving gear 30 connecting the differential and four free gears 32, 34, 33, 31 respectively matching the second shift stationary gear 22, the fourth shift stationary gear 24, the third shift stationary gear 13 and the first shift stationary gear 11; the second output shaft 4 is disposed with a second driving gear 40 connecting the differential, an intermediate stepped free gear 48 connecting with the second shift stationary gear 22 and three free gears 46, 47, 45 respectively matching the sixth shift stationary gear 24, the seventh shift stationary gear 17 and the fifth shift stationary gear 15; the third output shaft 5 is disposed with a reverse shift free gear 58 and a third driving gear 50 connecting the differential, wherein, the intermediate stepped free gear 48 has a larger gear wheel engaging the second shift stationary gear 22 and a smaller gear wheel engaging the reverse shift free gear 58. Preferably, the third output shaft 5 further comprises a parking ratchet gear 51, as few gears are arranged on the third output shaft, sufficient space may be used to arrange the parking ratchet gear 51 to avoid inappropriate space utilization problem while the parking ratchet gear 51 is displaced in other places.

In the present example, the driving motor 200 is coupled with the third output shaft 5, in which the driving shaft 201 of the driving motor 200 is disposed with a driving gear 202, one end of the third output shaft 5 that is further away from the differential is disposed with a driven gear 59 engaging the driving gear 202, and the driven gear 59 is fixedly connected or integrated with the third output shaft 5.

In the present example, a first shifting clutch S1 is disposed between the first shift free gear 31 and the third shift free gear 33 to engage or disengage the first shift free gear 31 and the third shift free gear 33 with the first output shaft 3; a second shifting clutch S5 is disposed between the fifth shift free gear 45 and the seventh shift free gear 47 to engage or disengage the fifth shift free gear 45 and the seventh shift free gear 47 with the second output shaft 4; a third shifting clutch S2 is disposed between the second shift free gear 32 and the fourth shift free gear 34 to engage or disengage the second shift free gear 32 and the fourth shift free gear 34 with the first output shaft 3; a fourth shifting clutch S6 is disposed between the sixth shift free gear 46 and the intermediate free gear 48 to engage or disengage the sixth shift free gear 46 and the intermediate free gear 48 with the second output shaft 4; a fifth shifting clutch SR is disposed at the transmission side of the reverse shift free gear 58 to engage or disengage the reverse shift free gear 58 with the third output shaft 5. In the present example, while the driving motor 200 is coupled with the same output shaft with the reverse shift free gear (the third output shaft 5), pure electrical reversing mode may also be realized.

The driving motor of the above examples, drives the output shaft directly. Compared to the present method of arranging the driving motor on the hollow shaft, the motor disposal in the present invention may be simpler and the utilization of the space may be more reasonable. Meanwhile, breaking of the hollow input shaft while subject to a large torque may be avoided. Moreover, while the driving motor drives the same shaft with the reverse shift gear, pure electric reversing mode may be obtained.

In the existing method of arranging the driving motor on the hollow shaft, under the hybrid driving mode (the driving motor and the engine both drive), two shifting clutch are needed during shifting (one for output of the engine, the other one for output of the driving motor) if the current shift is not on the hollow shaft, therefore it's difficult to control. According to the present invention, the driving motor is directly connected to the driving gear and the driving gear is always engaged with the driven gear, and the driven gear is fixedly connected or integrated with the corresponding output shaft, therefore, the power output of the driving motor does not need to go through a shifting clutch. Therefore, one shifting clutch is needed to control the engine power in this case and the control may be easier.

The hybrid driving system properly utilized the space and therefore is easy for arrangement of the other components in the vehicle.

Moreover, by adopting dual clutch transmission in the hybrid vehicle, the characteristics of the dual clutch transmission may be utilized and further enhance the fuel economy and dynamic performance.

The present invention further provided a vehicle having the above mentioned hybrid driving system, preferably the hybrid driving system is disposed in the front cabin of the vehicle.

As the hybrid driving system properly utilized the space and therefore is easy for arrangement of the other components in the cabin of the vehicle. Moreover, by adopting dual clutch transmission in the hybrid vehicle, the characteristics of the dual clutch transmission may be utilized and further enhance the fuel economy and dynamic performance.

## Claims

1. A hybrid power driving system comprising:
an engine (100) including a crankshaft (101),
a dual clutch transmission coupled to the crankshaft (101);
wherein the dual clutch transmission includes:
a first clutch (C2) and a second clutch (C1) effectively connected with the crankshaft (101);
a transmission having:
a first input shaft (2) connecting with the first clutch (C2);
a second input shaft (1) connecting with the second clutch (C1);
wherein the first input shaft (2) is hollow, the second input shaft (1) is inserted into the first shaft (2) and shares the same axle with the first shaft (2);
shifting gear sets, wherein each shifting gear set comprises at least a
stationary gear (11...26) and a forward free gear (31...37) matching the stationary gear (11...26);
the stationary gears (11...26) of the shifting gear sets are disposed on the first input shaft (2) and the second input (1) shaft;
a first output shaft (3) having one end coupled with a differential;
a second output shaft (4) having one end coupled with the differential,
**characterized in that**
the second output shaft has the other end connected with a driving motor (200),
whereby the first output shaft (3) is disposed with the forward free gears (31...37) of the shifting gear sets and the driving motor (200) drives the second output shaft (4) directly.

2. The hybrid driving system according to claim 1, wherein, from the engine side, the first input shaft (2) is in turns disposed with a second shift stationary gear (22), a fourth shift stationary gear (24) and a sixth shift stationary gear (26), the second input shaft (1) is in turns disposed with a seventh shift stationary gear (17), a fifth shift stationary gear (15), a third shift stationary gear (13) and a first shift stationary gear (11), the first output shaft (3) is disposed with seven forward free gears (31, 32, 33, 34, 35, 36, 37) matching the above seven stationary gears (11, 22, 13, 24, 15, 26, 17) and a first driving gear (30) connecting the differential, the second output shaft (4) is disposed with a reverse shift free gear (48) and a second driving gear (40) connecting the differential, wherein, the second shift free gear (32) is a stepped gear having an intermediate free gear (38) engaged with the reverse shift free gear (48).

3. The hybrid driving system according to claim 2, wherein, the driving motor (200) is coupled with the second output shaft (4), and the driving shaft (201) of the driving motor (200) has a third driving gear (202), one end of the second output shaft (4) that is further from the differential has a first driven gear (49) engaged with the third driving gear (202), the first driven gear (49) is fixedly connected or integrated with the second output shaft (4)

4. The hybrid driving system according to claim 2, wherein, a first shifting clutch (S1) is disposed between the first shift free gear (31) and the third shift free gear (33) to engage or disengage the first shift free gear (31) and the third shift free gear (33) with the first output shaft (3); a second shifting clutch (S2) is disposed between the fifth shift free gear (35) and the seventh shift free gear (37) to engage or disengage the fifth shift free gear (35) and the seventh shift free gear (37) with the first output shaft (3); a third shifting clutch (S4) is disposed between the second shift free gear (32) and the fourth shift free gear (34) to engage or disengage the second shift free gear (32) and the fourth shift free gear (34) with the first output shaft (3); a fourth shifting clutch (S3) is disposed at the engine side of the sixth shift free gear (36) to engage or disengage the sixth shift free gear (36) with the first output shaft (3); a fifth shifting clutch (SR) is disposed at the transmission side of the reverse shift free gear (48) to engage or disengage the reverse shift free gear (48) with the second output shaft (4).

5. A hybrid power driving system comprising:
an engine (100) including a crankshaft (101),
a dual clutch transmission coupled to the crankshaft (101);
wherein the dual clutch transmission includes:
a first clutch (C2) and a second clutch (C1) effectively connected with the crankshaft (101);
a transmission having:
a first input shaft (2) connecting with the first clutch (C2);
a second input shaft (1) connecting with the second clutch (C1);
wherein the first input shaft (2) is hollow, the second input shaft (1) is inserted into the first shaft (2) and shares the same axle with the first shaft (2);
shifting gear sets, wherein each shifting gear set comprises at least a
stationary gear (11...24) and a forward free gear (31...47) matching the stationary gear (11...24);
the stationary gears (11...24) of the shifting gear sets are disposed on the first input shaft (2) and the second input (1) shaft;
a first output shaft (3) and a second output shaft (4) disposed with the forward free gears (31...47) of the shifting gear sets having one end coupled with a differential;
**characterized by**
a third output shaft (5) having one end coupled with the differential, and the other end connected with a driving motor (200), wherein the driving motor (200) drives the third output shaft (5) directly.

6. The hybrid driving system according to claim 5, wherein, from the engine side, the first input shaft (2) is in turns disposed with a second shift stationary gear (22), a fourth shift stationary gear (24), the second input shaft (1) is in turns disposed with a seventh shift stationary gear (17), a third shift stationary gear (13), a fifth shift stationary gear (15) and a first shift stationary gear (11), wherein, the sixth shift and the fourth shift shares one stationary gear (24), the first output shaft (3) is disposed with a first driving gear (30) connecting the differential and four forward free gears (32, 34, 33, 31) respectively matching the second shift stationary gear (22), the fourth shift stationary gear (24), the third shift stationary gear (13) and the first shift stationary gear (11); the second output shaft (4) is disposed with a second driving gear (40) connecting the differential, an intermediate stepped free gear (48) connecting with the second shift stationary gear (22) and three forward free gears (46, 47, 45) respectively matching the sixth shift stationary gear (24), the seventh shift stationary gear (17) and the fifth shift stationary gear (15); the third output shaft (5) is disposed with a reverse shift free gear (58) and a third driving gear (50) connecting the differential, wherein, the intermediate stepped free gear (48) has a larger gear wheel engaging the second shift stationary gear (22) and a smaller gear wheel engaging the reverse shift free gear (58).

7. The hybrid driving system according to claim 6, wherein, the driving motor (200) is coupled with the third output shaft (5), wherein, the driving shaft (201) of the driving motor (200) is disposed with a fourth driving gear (202), one end of the third output shaft (5) that is further away from the differential is disposed with a first driven gear (59) engaging the fourth driving gear (202), and the first driven gear (59) is fixedly connected or integrated with the third output shaft (5)

8. The hybrid driving system according to claim 7, wherein, the third output shaft (5) has a parking ratchet wheel (51).

9. The hybrid driving system according to claim 6, wherein, a first shifting clutch (S1) is disposed between the first shift free gear (31) and the third shift free gear (33) to engage or disengage the first shift free gear (31) and the third shift free gear (33) with the first output shaft (3); a second shifting clutch (S5) is disposed between the fifth shift free gear (45) and the seventh shift free gear (47) to engage or disengage the fifth shift free gear (45) and the seventh shift free gear (47) with the second output shaft (4); a third shifting clutch (S2) is disposed between the second shift free gear (32) and the fourth shift free gear (34) to engage or disengage the second shift free gear (32) and the fourth shift free gear (34) with the first output shaft (3); a fourth shifting clutch (S6) is disposed between the sixth shift free gear (46) and the intermediate stepped free gear (48) to engage or disengage the sixth shift free gear (46) and the intermediate stepped free gear (48) with the second output shaft (4); a fifth shifting clutch (SR) is disposed at the transmission side of the reverse shift free gear (58) to engage or disengage the reverse shift free gear (58) with the third output shaft (5).

10. A vehicle comprising the hybrid driving system according to claim 1 or 5.

## Patentansprüche

1. Hybridantriebssystem, aufweisend:
einen Motor (100), der eine Kurbelwelle (101) aufweist,
ein Doppelkupplungsgetriebe, das mit der Kurbelwelle (101) gekoppelt ist;
wobei das Doppelkupplungsgetriebe aufweist:
eine erste Kupplung (C2) und eine zweite Kupplung (C1), die mit der Kurbelwelle (101) in Wirkverbindung stehen;
ein Getriebe, aufweisend:
eine erste Eingangswelle (2), die mit der ersten Kupplung (C2) verbunden ist;
eine zweite Eingangswelle (1), die mit der zweiten Kupplung (C1) verbunden ist;
wobei die erste Eingangswelle (2) hohl ist, wobei die zweite Eingangswelle (1) in die erste Eingangswelle (2) eingesetzt ist und mit der ersten Eingangswelle (2) die selbe Achse teilt;
Gangschaltzahnradsätze, wobei jeder Gangschaltzahnradsatz zumindest ein Festrad (11 ... 26) und ein Vorwärtsgang-Losrad (31 ... 37) aufweist, das sich mit dem Festrad (11 ... 26) paart;
wobei die Festräder (11 ... 26) der Gangschaltzahnradsätze auf der ersten Eingangswelle (2) und der zweiten Eingangswelle (1) angeordnet sind;
eine erste Ausgangswelle (3), die ein Ende aufweist, das mit einem Differential gekoppelt ist;
eine zweite Ausgangswelle (4), die ein Ende aufweist, das mit dem Differential gekoppelt ist,
**dadurch gekennzeichnet, dass**
bei der zweiten Ausgangswelle (4) das andere Ende mit einem Antriebsmotor (200) verbunden ist,
wobei die erste Ausgangswelle (3) mit den Vorwärtsgang-Losrädern (31 ... 37) der Gangschaltzahnradsätze versehen ist und der Antriebsmotor (200) die zweite Ausgangswelle (4) direkt antreibt.

2. Hybridantriebssystem nach Anspruch 1, wobei ausgehend von der Motorseite die erste Eingangswelle (2) der Reihe nach mit einem zweiten Gangschalt-Festrad (22), einem vierten Gangschalt-Festrad (24) und einem sechsten Gangschalt-Festrad (26) versehen ist, die zweite Eingangswelle (1) abwechselnd mit einem siebten Gangschalt-Festrad (17), einem fünften Gangschalt-Festrad (15), einem dritten Gang-Festrad (13) und einem ersten Gangschalt-Festrad (11) versehen ist, die erste Ausgangswelle (3) mit sieben Vorwärtsgang-Losrädern (31, 32, 33, 34, 35, 36, 37), die sich mit den oben genannten sieben Festrädern (11, 22, 13, 24, 15, 26, 17) paaren, und einem ersten Antriebszahnrad (30), das mit dem Differential verbunden ist, versehen ist, die zweite Ausgangswelle (4) mit einem Rückwärtsgangschalt-Losrad (48) und einem zweiten Antriebszahnrad (40), das mit dem Differential verbunden ist, versehen ist, wobei das zweite Gangschalt-Losrad (32) ein Stufenzahnrad ist, das ein Zwischenlosrad (38) aufweist, das mit dem Rückwärtsgangschalt-Losrad (48) in Eingriff steht.

3. Hybridantriebssystem nach Anspruch 2, wobei der Antriebsmotor (200) mit der zweiten Ausgangswelle (4) gekoppelt ist und die Antriebswelle (201) des Antriebsmotors (200) ein drittes Antriebszahnrad (202) aufweist, wobei ein Ende der zweiten Ausgangswelle (4), das sich weiter entfernt vom Differential befindet, ein erstes Abtriebszahnrad (49) aufweist, das mit dem dritten Antriebszahnrad (202) in Eingriff steht, wobei das erste Abtriebszahnrad (49) mit der zweiten Ausgangswelle (4) fest verbunden oder einstückig mit ihr ausgebildet ist.

4. Hybridantriebssystem nach Anspruch 2, wobei eine erste Schaltkupplung (S1) zwischen dem ersten Gangschalt-Losrad (31) und dem dritten Gangschalt-Losrad (33) angeordnet ist, um das erste Gangschalt-Losrad (31) und das dritte Gangschalt-Losrad (33) mit der ersten Ausgangswelle (3) einzukuppeln oder von ihr auszukuppeln; eine zweite Schaltkupplung (S2) zwischen dem fünften Gangschalt-Losrad (35) und dem siebten Gangschalt-Losrad (37) angeordnet ist, um das fünfte Gangschalt-Losrad (35) und das siebte Gangschalt-Losrad (37) mit der ersten Ausgangswelle (3) einzukuppeln oder von ihr auszukuppeln; eine dritte Schaltkupplung (S4) zwischen dem zweiten Gangschalt-Losrad (32) und dem vierten Gangschalt-Losrad (34) angeordnet ist, um das zweite Gangschalt-Losrad (32) und das vierte Gangschalt-Losrad (34) mit der ersten Ausgangswelle (3) einzukuppeln oder von ihr auszukuppeln; eine vierte Schaltkupplung (S3) auf der Motorseite des sechsten Gangschalt-Losrads (36) angeordnet ist, um das sechste Gangschalt-Losrad (36) mit der ersten Ausgangswelle (3) einzukuppeln oder von ihr auszukuppeln, und eine fünfte Schaltkupplung (SR) auf der Getriebeseite des Rückwärtsgangschalt-Losrads (48) angeordnet ist, um das Rückwärtsgangschalt-Losrad (48) mit der zweiten Ausgangswelle (4) einzukuppeln oder von ihr auszukuppeln.

5. Hybridantriebssystem, aufweisend:
einen Motor (100), der eine Kurbelwelle (101) aufweist,
ein Doppelkupplungsgetriebe, das mit der Kurbelwelle (101) gekoppelt ist;
wobei das Doppelkupplungsgetriebe aufweist:
eine erste Kupplung (C2) und eine zweite Kupplung (C1), die mit der Kurbelwelle (101) in Wirkverbindung stehen;
ein Getriebe, aufweisend:
eine erste Eingangswelle (2), die mit der ersten Kupplung (C2) verbunden ist;
eine zweite Eingangswelle (1), die mit der zweiten Kupplung (C1) verbunden ist;
wobei die erste Eingangswelle (2) hohl ist, wobei die zweite Eingangswelle (1) in die erste Eingangswelle (2) eingesetzt ist und mit der ersten Eingangswelle (2) die selbe Achse teilt;
Gangschaltzahnradsätze, wobei jeder Gangschaltzahnradsatz zumindest ein Festrad (11 ... 24) und ein Vorwärtsgang-Losrad (31 ... 47) aufweist, das sich mit dem Festrad (11 ... 24) paart;
wobei die Festräder (11 ... 24) der Gangschaltzahnradsätze auf der ersten Eingangswelle (2) und der zweiten Eingangswelle (1) angeordnet sind;
eine erste Ausgangswelle (3) und eine zweite Ausgangswelle (4), die mit den Vorwärtsgang-Losrädern (31 ... 47) der Gangschaltzahnradsätze versehen sind und ein Ende aufweisen, das mit einem Differential gekoppelt ist;
**gekennzeichnet durch**
eine dritte Ausgangswelle (5), die ein Ende aufweist, das mit dem Differential gekoppelt ist und deren anderes Ende mit einem Antriebsmotor (200) verbunden ist, wobei der Antriebsmotor (200) die dritte Ausgangswelle (5) direkt antreibt.

6. Hybridantriebssystem nach Anspruch 5, wobei ausgehend von der Motorseite die erste Eingangswelle (2) der Reihe nach mit einem zweiten Gangschalt-Festrad (22), einem vierten Gangschalt-Festrad (24) versehen ist und die zweite Eingangswelle (1) abwechselnd mit einem siebten Gangschalt-Festrad (17), einem dritten Gangschalt-Festrad (13), einem fünften Gangschalt-Festrad (15) und einem ersten Gangschalt-Festrad (11) versehen ist, wobei sich der sechste Gang und der vierte Gang ein Festrad (24) teilen; die erste Ausgangswelle (3) mit einem ersten Antriebszahnrad (30), das mit dem Differential verbunden ist, und vier Vorwärtsgang-Losrädern (32, 34, 33, 31) versehen ist, die sich entsprechend mit dem zweiten Gangschalt-Festrad (22), dem vierten Gangschalt-Festrad (24), dem dritten Gangschalt-Festrad (13) und dem ersten Gangschalt-Festrad (11) paaren; die zweite Ausgangswelle (4) mit einem zweiten Antriebszahnrad (40), das mit dem Differential verbunden ist, einem Stufenzwischen-Losrad (48), das mit dem zweiten Gangschalt-Festrad (22) verbunden ist, und drei Vorwärtsgang-Losrädern (46, 47, 45), die sich entsprechend mit dem sechsten Gangschalt-Festrad (24), dem siebten Gangschalt-Festrad (17) und dem fünften Gangschalt-Festrad (15) paaren, versehen ist; die dritte Ausgangswelle (5) mit einem Rückwärtsgangschalt-Losrad (58) und einem dritten Antriebsrad (50), das mit dem Differential verbunden ist, versehen ist, wobei das Stufenzwischen-Losrad (48) ein größeres Zahnrad, das mit dem zweiten Gangschalt-Festrad (22) in Eingriff steht, und ein kleineres Zahnrad aufweist, das mit dem Rückwärtsgangschalt-Losrad (58) in Eingriff steht.

7. Hybridantriebssystem nach Anspruch 6, wobei der Antriebsmotor (200) mit der dritten Ausgangswelle (5) gekoppelt ist, wobei die Antriebswelle (201) des Antriebsmotors (200) mit einem vierten Antriebszahnrad (202) versehen ist, wobei ein Ende der dritten Ausgangswelle (5), das sich weiter entfernt vom Differential befindet, mit einem ersten Abtriebszahnrad (59) versehen ist, das mit dem vierten Antriebszahnrad (202) in Eingriff steht, und wobei das erste Abtriebszahnrad (59) mit der dritten Ausgangswelle (5) fest verbunden oder einstückig mit ihr ausgebildet ist.

8. Hybridantriebssystem nach Anspruch 7, wobei die dritte Ausgangswelle (5) ein Park-Sperrrad (51) aufweist.

9. Hybridantriebssystem nach Anspruch 6, wobei eine erste Schaltkupplung (S1) zwischen dem ersten Gangschalt-Losrad (31) und dem dritten Gangschalt-Losrad (33) angeordnet ist, um das erste Gangschalt-Losrad (31) und das dritte Gangschalt-Losrad (33) mit der ersten Ausgangswelle (3) einzukuppeln oder von ihr auszukuppeln; eine zweite Schaltungskupplung (S5) zwischen dem fünften Gangschalt-Losrad (45) und dem siebten Gangschalt-Losrad (47) angeordnet ist, um das fünfte Gangschalt-Losrad (45) und das siebte Gangschalt-Losrad (47) mit der zweiten Ausgangswelle (4) einzukuppeln oder von ihr auszukuppeln; eine dritte Schaltkupplung (S2) zwischen dem zweiten Gangschalt-Losrad (32) und dem vierten Gangschalt-Losrad (34) angeordnet ist, um das zweite Gangschalt-Losrad (32) und das vierte Gangschalt-Losrad (34) mit der ersten Ausgangswelle (3) einzukuppeln oder von ihr auszukuppeln; eine vierte Schaltkupplung (S6) zwischen dem sechsten Gangschalt-Losrad (46) und dem Stufenzwischen-Losrad (48) angeordnet ist, um das sechste Gangschalt-Losrad (46) und das freie Stufenzwischenrad (48) mit der zweiten Ausgangswelle (4) einzukuppeln oder von ihr auszukuppeln; und eine fünfte Schaltkupplung (SR) auf der Getriebeseite des Rückwärtsgangschalt-Losrads (58) angeordnet ist, um das Rückwärtsgangschalt-Losrad (58) mit der dritten Ausgangswelle (5) einzukuppeln oder von ihr auszukuppeln.

10. Fahrzeug, aufweisend das Hybridantriebssystem nach Anspruch 1 oder 5.

## Revendications

1. Système de commande hybride, comprenant:
un moteur (100) comprenant un vilebrequin (101),
une transmission à double embrayage couplée au vilebrequin (101) ;
la transmission à double embrayage comprenant :
un premier embrayage (C2) et un second embrayage (C1) qui sont en liaison coopérante avec le vilebrequin (101) ;
une transmission ayant :
un premier arbre (2) d'entrée relié au premier embrayage (C2) ;
un deuxième arbre (1) d'entrée relié au second embrayage (C1) ;
le premier arbre (1) d'entrée étant creux, le deuxième arbre (1) d'entrée étant inséré dans le premier arbre (2) et partageant le même axe avec le premier arbre (2) ;
des ensembles de pignons de changement de vitesse, chaque ensemble de pignons de changement de vitesse comprenant au moins un pignon (11 ... 26) stationnaire et un pignon (31 ... 37) de marche avant libre s'adaptant au pignon (11 ... 26) stationnaire ;
les pignons (11 ... 26) stationnaires des ensembles de pignons de changement de vitesse étant disposés sur le premier arbre (2) d'entrée et le deuxième arbre (1) d' entrée ;
un premier arbre (3) de sortie ayant une extrémité couplée à un engrenage différentiel ;
un deuxième arbre (4) de sortie ayant une extrémité couplée à l'engrenage différentiel,
**caractérisé en ce que**
le deuxième arbre de sortie a l' autre extrémité couplée à un moteur (200) d'entraînement,
le premier arbre (3) de sortie étant disposé avec les pignons (31 ... 37) de marche avant libres des ensembles de pignons de changement de vitesse, et le moteur (200) d'entraînement entraînant directement le deuxième arbre (4) de sortie.

2. Système d'entraînement hybride selon la revendication 1, dans lequel, du côté moteur, le premier arbre (2) d'entrée est disposé à tour de rôle avec un deuxième pignon (22) de changement de vitesse stationnaire, un quatrième pignon (24) de changement de vitesse stationnaire et un sixième pignon (26) de changement de vitesse stationnaire, le deuxième arbre (1) d'entrée étant disposé à tour de rôle avec un septième pignon (17) de changement de vitesse stationnaire, un cinquième pignon (15) de changement de vitesse stationnaire, un troisième pignon (13) de changement de vitesse stationnaire et un premier pignon (11) de changement de vitesse stationnaire, le premier arbre (3) de sortie étant disposé avec sept pignons (31, 32, 33, 34, 35, 36, 37) de marche avant libres s'adaptant aux sept pignons (11, 22, 13, 24, 15, 26, 17) stationnaires susdits, et un premier pignon (30) menant reliant l'engrenage différentiel, le deuxième arbre (4) de sortie étant disposé avec un pignon (48) de passage à la marche arrière libre et un deuxième pignon (40) menant reliant l'engrenage différentiel, le deuxième pignon (32) de changement de vitesse libre étant un pignon étagé ayant un pignon (38) intermédiaire libre en prise avec le pignon (48) de passage à la marche arrière libre.

3. Système hybride d'entraînement selon la revendication 2, dans lequel le moteur (200) d'entraînement est couplé au deuxième arbre (4) de sortie et l'arbre (201) d'entraînement du moteur (200) d'entraînement a un troisième pignon (202) menant, une extrémité du deuxième arbre (4) de sortie qui est plus éloignée de l'engrenage différentiel ayant un premier pignon (49) mené en prise avec le troisième pignon (202) menant, le premier pignon (49) mené étant relié de manière fixe ou intégré au deuxième arbre (4) de sortie.

4. Système d'entraînement hybride selon la revendication 2, dans lequel un premier embrayage (S1) est disposé entre le premier pignon (31) de changement de vitesse libre et le troisième pignon (33) de changement de vitesse libre pour engager le premier pignon (31) de changement de vitesse libre et le troisième pignon (33) de changement de vitesse libre avec le premier arbre (3) de sortie ou pour les désengager du premier arbre (3) de sortie ; un deuxième embrayage (S2) étant disposé entre le cinquième pignon (35) de changement de vitesse libre et le septième pignon (37) de changement de vitesse libre pour engager le cinquième pignon (35) de changement de vitesse libre et le septième pignon (37) de changement de vitesse libre avec le premier arbre (3) de sortie ou pour les désengager du premier arbre (3) de sortie ; un troisième embrayage (S4) étant disposé entre le deuxième pignon (32) de changement de vitesse libre et le quatrième pignon (34) de changement de vitesse libre pour engager le deuxième pignon (32) de changement de vitesse libre et le quatrième pignon (34) de changement de vitesse libre avec le premier arbre (3) de sortie ou pour les désengager du premier arbre (3) de sortie ; un quatrième embrayage (S3) étant disposé sur le côté moteur du sixième pignon (36) de changement de vitesse libre pour engager le sixième pignon (36) de changement de vitesse libre avec le premier arbre (3) de sortie ou pour le désengager du premier arbre (3) de sortie ; un cinquième embrayage (SR) étant disposé sur le côté transmission du pignon (48) de passage à la marche arrière libre pour engager le pignon (48) de passage à la marche arrière libre avec le deuxième arbre (4) de sortie ou pour le désengager du deuxième arbre (4) de sortie.

5. Système d'entraînement hybride, comprenant :
un moteur (100) comprenant un vilebrequin (101),
une transmission à double embrayage couplé au vilebrequin (101) ;
la transmission à double embrayage comprenant :
un premier embrayage (C2) et un second embrayage (C1) qui sont en liaison coopérante avec le vilebrequin (101) ;
une transmission ayant :
un premier arbre (2) d'entrée relié au premier embrayage (C2) ;
un deuxième arbre (1) d'entrée relié au second embrayage (C1) ;
le premier arbre (2) d'entrée étant creux, le deuxième arbre (1) d'entrée étant inséré dans le premier arbre (2) et partageant le même axe avec le premier arbre (2) ;
des ensembles de pignons de changement de vitesse, chaque ensemble de pignons de changement de vitesse comprenant au moins un pignon (11 ... 24) stationnaire et un pignon (31 ... 47) de marche avant libre s'adaptant au pignon (11 ... 24) stationnaire ;
les pignons (11 ... 24) stationnaires des ensembles de pignons de changement de vitesse étant disposés sur le premier arbre (2) d'entrée et le deuxième arbre (1) d' entrée ;
un premier arbre (3) de sortie et un deuxième arbre (4) de sortie disposés avec les pignons (31 ... 47) de marche avant libres des ensembles de pignons de changement de vitesse en ayant une extrémité couplée à un engrenage différentiel ;
**caractérisé par**
un troisième arbre (5) de sortie ayant une extrémité couplée à l'engrenage différentiel et l'autre extrémité couplée à un moteur (200) d'entraînement, le moteur (200) d'entraînement entraînant directement le troisième arbre (5) de sortie.

6. Système d'entraînement hybride selon la revendication 5, dans lequel, du côté moteur, le premier arbre (2) d'entrée est disposé à tour de rôle avec un deuxième pignon (22) de changement de vitesse stationnaire, un quatrième pignon (24) de changement de vitesse stationnaire, le deuxième arbre (1) d'entrée étant disposé à tour de rôle avec un septième pignon (17) de changement de vitesse stationnaire, un troisième pignon (13) de changement de vitesse stationnaire, un cinquième pignon (15) de changement de vitesse stationnaire et un premier pignon (11) de changement de vitesse stationnaire, le sixième changement de vitesse et le quatrième changement de vitesse partageant un pignon (24) stationnaire, le premier arbre (3) de sortie étant disposé avec un premier pignon (30) menant reliant l'engrenage différentiel et quatre pignons (32, 34, 33, 31) de marche avant libres s'adaptant au deuxième pignon (22) de changement de vitesse stationnaire, au quatrième pignon (24) de changement de vitesse stationnaire, au troisième pignon (13) de changement de vitesse stationnaire et au premier pignon (11) de changement de vitesse stationnaire, respectivement ; le deuxième arbre (4) de sortie étant disposé avec un deuxième pignon (40) menant reliant l'engrenage différentiel, un pignon (48) intermédiaire étagé libre relié au deuxième pignon (22) de changement de vitesse stationnaire et trois pignons (46, 47, 45) de marche avant libres s'adaptant au sixième pignon (24) de changement de vitesse stationnaire, au septième pignon (17) de changement de vitesse stationnaire et au cinquième pignon (15) de changement de vitesse stationnaire, respectivement ; le troisième arbre (5) de sortie étant disposé avec un pignon (58) de passage à la marche arrière libre et un troisième pignon (50) menant reliant l'engrenage différentiel, le pignon (48) intermédiaire étagé libre ayant un pignon plus grand engageant le deuxième pignon (22) de changement de vitesse stationnaire et un pignon plus petit engageant le pignon (58) de passage à la marche arrière libre.

7. Système d'entraînement hybride selon la revendication 6, dans lequel le moteur (200) d'entraînement est couplé au troisième arbre (5) de sortie, l'arbre (201) d'entraînement du moteur (200) d'entraînement étant disposé avec un quatrième pignon (202) menant, une extrémité du troisième arbre (5) de sortie qui est plus éloignée de l'engrenage différentiel étant disposée avec un premier pignon (59) mené engageant le quatrième pignon (202) menant, et le premier pignon (59) mené étant relié de manière fixe ou intégré au troisième arbre (5) de sortie.

8. Système d'entraînement hybride selon la revendication 7, dans lequel le troisième arbre (5) de sortie a une roue (51) à cliquet de stationnement.

9. Système d'entraînement hybride selon la revendication 6, dans lequel un premier embrayage (S1) est disposé entre le premier pignon (31) de changement de vitesse libre et le troisième pignon (33) de changement de vitesse libre pour engager le premier pignon (31) de changement de vitesse libre et le troisième pignon (33) de changement de vitesse libre avec le premier arbre (3) de sortie ou pour les désengager du premier arbre (3) de sortie ; un deuxième embrayage (S5) étant disposé entre le cinquième pignon (45) de changement de vitesse libre et le septième pignon (47) de changement de vitesse libre pour engager le cinquième pignon (45) de changement de vitesse libre et le septième pignon (47) de changement de vitesse libre avec le deuxième arbre (4) de sortie ou pour les désengager du deuxième arbre (4) de sortie ; un troisième embrayage (S2) étant disposé entre le deuxième pignon (32) de changement de vitesse libre et le quatrième pignon (34) de changement de vitesse libre pour engager le deuxième pignon (32) de changement de vitesse libre et le quatrième pignon (34) de changement de vitesse libre avec le premier arbre (3) de sortie ou pour les désengager du premier arbre (3) de sortie ; un quatrième embrayage (S6) étant disposé entre le sixième pignon (46) de changement de vitesse libre et le pignon (48) intermédiaire étagé libre pour engager le sixième pignon (46) de changement de vitesse libre et le pignon (48) intermédiaire étagé libre avec le deuxième arbre (4) de sortie or pour les désengager du deuxième arbre (4) de sortie ; un cinquième embrayage (SR) étant disposé sur le côté transmission du pignon (58) de passage à la marche arrière (58) libre pour engager le pignon (58) de passage à la marche arrière libre avec le troisième arbre (5) de sortie ou pour le désengager du troisième arbre de sortie.

10. Véhicule comprenant le système d'entraînement hybride selon les revendications 1 ou 5.
